# EUROPEAN PATENT APPLICATION

(11) **EP 1 519 332 A1**
(43) Date of publication of application: **30.03.2005**
(21) Application number: 04104654.1
(22) Date of filing: 24.09.2004
(51) Int. Cl.: G07F 17/16, G07F 7/02

(54) **Method and system for receiving digital content using a prepaid digital content card**

(30) Priority: 26.09.2003 US 506583 P; 31.12.2003 US 750362
(71) Applicant: AT&T Corp., New York, NY 10013-2412 (US)
(72) Inventor: Palumbo, Michael, 07853, Long Valley, NJ New Jersey (US); Baross, John, F., NJ 07853, Long Valley (US); Evans, Mark, P., 08801, Annandale (US)
(74) Representative: Suckling, Andrew Michael

(57) **Abstract**

A method and system for providing digital content to consumers utilizing a prepaid digital content medium. The method includes receiving unique identification information associated with a prepaid digital content medium (PDCM) from a consumer distributor of the PDCM. Upon payment for the PDCM by a purchaser, unique identifying information associated with the PDCM is sent to an authentication service provider, and the PDCM is activated based upon the identification information. The authentication service provider sends confirmation of activation of the PDCM to a digital content provider in response to a request for confirmation from the digital content provider, where the digital content provider sends the request for confirmation in response to a request for the digital content by a consumer possessing the purchased PDCM.

## Description

### CROSS-REFERENCE TO RELATED APPLICATIONS

This application claims benefit of United States Provisional Patent Application Serial Number 60/506,583, filed September 26, 2003, which is incorporated by reference herein in its entirety.

### Field of the Invention

The present invention relates to prepaid cards for purchasing content, and more specifically, a method and system for purchasing digital content from a digital content provider using prepaid digital content cards

### BACKGROUND OF THE INVENTION

Conventional prepaid cards have been offered by various retailers and service providers to enable consumers to purchase goods and services that are either not defined or quantized at the time of purchasing the prepaid cards. For example, a retailer may offer a prepaid gift card to a consumer to allow a recipient of the card to apply the dollar amount associated with the card to purchase any product such that the balance of the prepaid gift card is applied to the purchase amount. Similarly, prepaid call cards allow a purchaser or recipient to purchase a predefined amount of minutes to make telephone calls, and then use the card at a later time, thereby depleting the value of the prepaid card as the card is being used to make phone calls.

From the perspective of the consumer, the prepaid cards let the consumer budget a particular dollar amount that may be applied for consumption to a particular use, as well as enable a person to share the purchasing capacity with others, illustratively, in the form of a gift. From the perspective of the merchant, the merchant is assured that the consumers' dollars will be spent with the provider of the prepaid card, as opposed to competitors of the merchant. Although prepaid cards have been highly successful for merchants of tangible goods and phone services, presently, there is no way for consumers to purchase digital content, such as multimedia, from a digital content provider. Moreover, the digital content providers lack a system and method for attracting consumers to purchase their digital content in a prepaid manner. Therefore, there is a need in the art for a method and system to allow consumers to purchase digital content from digital content providers using prepaid digital content cards.

### SUMMARY OF THE INVENTION

The disadvantages heretofore associated with the prior art are overcome by the present invention of a method and system for providing digital content to consumers utilizing a prepaid digital content medium. The method and system includes receiving unique identification information associated with a prepaid digital content medium (PDCM) from a consumer distributor of the PDCM. Upon payment for the PDCM by a purchaser, unique identifying information associated with the PDCM is sent to an authentication service provider, and the PDCM is activated based upon the identification information.

The authentication service provider sends confirmation of activation of the PDCM to a digital content provider in response to a request for confirmation from the digital content provider. In particular, the digital content provider sends the request for confirmation in response to a request for the digital content by a consumer possessing the purchased PDCM.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 depicts a block diagram of an exemplary network suitable for implementing the present invention;

FIGS. 2A and 2B collectively depict a flow diagram of a method for activating a prepaid digital content medium of the present invention at an authentication service provider; and

FIGS. 3A-3C collectively depict a flow diagram of a method for acquiring digital content from a digital content provider using the prepaid digital content medium of the present invention.

### DETAILED DESCRIPTION OF THE PREFERRED EMBODIMENT

The present invention relates to a system and method for consumers to purchase prepaid cards associated with receiving digital content from a digital content provider. The term "prepaid cards" is provided for illustrative purposes only, and may include any tangible medium that permits a purchaser for digital content to prepay for specific digital content available from the digital content provider. In exchange for payment, a purchaser receives an article of manufacture, herein termed a prepaid digital content medium, which has unique identifying information for authentication and security purposes. The prepaid digital content medium may be used to receive the digital content at a future time, as opposed to going to a retailer to purchase and leave with the purchased products.

Accordingly, the present invention allows a promoter of digital content to indirectly sell such digital content, such as music, videos, ring tones, or any other digital content that may be downloaded to a computer-like device of a consumer. Purchasing of the digital content occurs via the use of prepaid cards sold by a retailer, which are first be authenticated during the purchasing process, and then validated at the digital content provider prior to downloading the digital content.

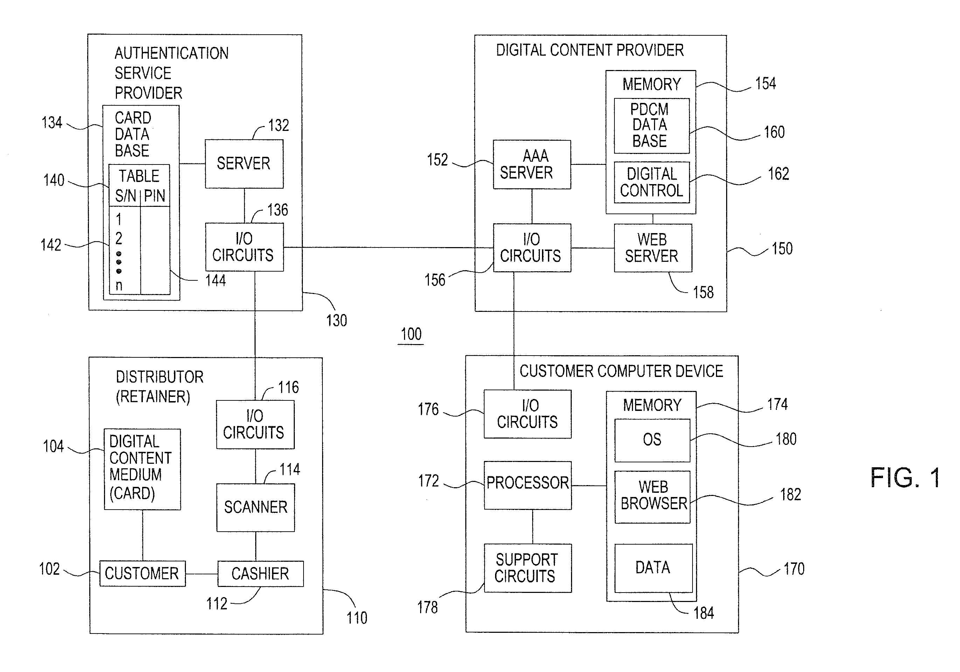

FIG. 1 depicts a block diagram of an exemplary network 100 suitable for implementing the present invention. In particular, the exemplary network 100 comprises a prepaid digital content medium distributor 110, an authentication service provider 130, a digital content provider 150, and at least one customer computer devices 170. In one embodiment, the distributor 110, authentication service provider 130, and digital content provider 150 are independent business entities who have formed a business alliance to promote and sell digital content via the prepaid digital content cards. However, one skilled in the art will appreciate that the distribution, authentication, and providing of digital content functions may be facilitated by a single business entity or among a combination of different business entities (e.g., subsidiaries, divisions, multiple corporations, among other business entities).

In one embodiment, the distributor 110 is any retailer designated to stock, promote, and sell prepaid digital content cards to a customer 102. The distributor may be a national, regional, or local retailer that comprises at least an inventory of digital content medium (cards) 104, a purchasing centre, such as a cashier or checkout counter 112, a digital content medium reading device, such as a card reader 114, and input/output (I/O) circuitry to communicate with the authentication service provider 130.

Although the distributor is described as a classic storefront retailer, the present invention also contemplates that the distributor may be a business entity doing business over the Internet. For example, an Internet company may provide a website that enables a customer 102 to shop for a prepaid digital content card associated with particular digital content (e.g., a movie, songs from a particular artist, among others). A customer 102 shopping on the website pays for the prepaid digital content card, illustratively, by credit card, and the internet company will then send the unique identifying information of the prepaid digital content medium 104 to the authentication service provider 130 via the internet. After payment, the internet company mails the purchased prepaid digital content medium 104 to the customer 102 for subsequent use thereafter.

Referring to FIG. 1, in one embodiment, the prepaid digital content medium (PDCM) 104 is a card having a shape and form similar to a credit card or prepaid calling card, as conventionally known in the art. At the time the PDCM 104 is fabricated, the PDCM 104 is provided with identifying information printed on the surface of the PDCM. In one embodiment, the identifying information of the PDCM 104 comprises a serial number (s/n) and a personal identification number (PIN). Promotional information may also be printed on the surfaces of the PDCM, where the promotional information corresponds to the digital content being offered for sale. Also printed on the surface of the PDCM 104 is a uniform resource locator (URL), which corresponds to a particular web page(s) of the content provider 150.

The PDCM 104 has no value to a customer 102 until the PDCM is purchased at the distributor 110, and the distributor 110 sends the unique identifying information to the authentication service provider 130 for activation. Specifically, the customer 102 selects a PDCM 104 from a display centre, and proceeds to pay for the PDCM 104 at the cashier (checkout counter) 112. After payment is made, the cashier 112 scans the PDCM 104 in a scanner 114, which reads the identifying information of the PDCM 104 and sends such identifying information to the authentication service provider 130, via the I/O circuitry. In the embodiment where the PDCMs are in the form of prepaid cards, such prepaid cards may include a magnetic strip that may be swiped through and read by a scanner 114 such as a card reader.

The authentication service provider 130 comprises at least one processor (e.g., server) 132, I/O circuitry 136, and memory for facilitating a database 134 for storing information regarding all of the PDCMs 104 that are available for sale by the distributors 110. In one embodiment, the authentication service provider 130 and distributor 110 communicate with each other via a host-to-host connection or any other direct communications channel that facilitates high speed and secure transfer of information therebetween.

In one embodiment, the database 134 comprises a table 140 having a plurality of entries, where each entry is associated with the unique identifying information of each PDCM available for sale. For example, in the embodiment where the PDCM is a prepaid card having a unique serial number and PIN, the database 134 comprises a serial number entry 142 and a corresponding PIN entry 144 for each prepaid digital content card 104 that was sent to the distributors 110 for sale. That is, the authentication service provider 130 stores the identifying information for each PDCM prior to the PDCM being available for sale by the distributors 110. The identifying information stored in the database 134 at the authentication service provider 130 is used to activate and later validate the PDCM 104.

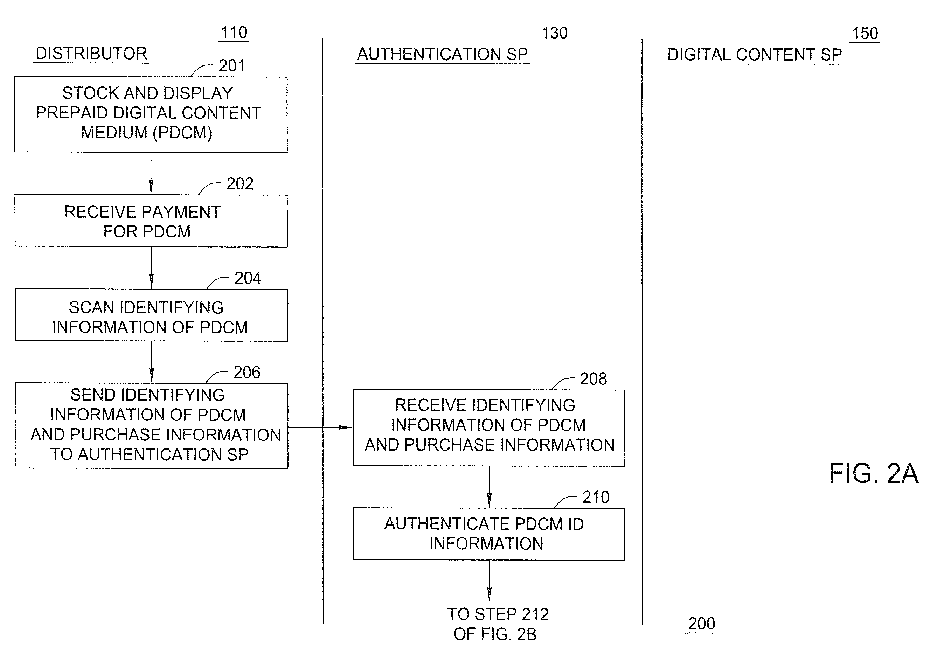

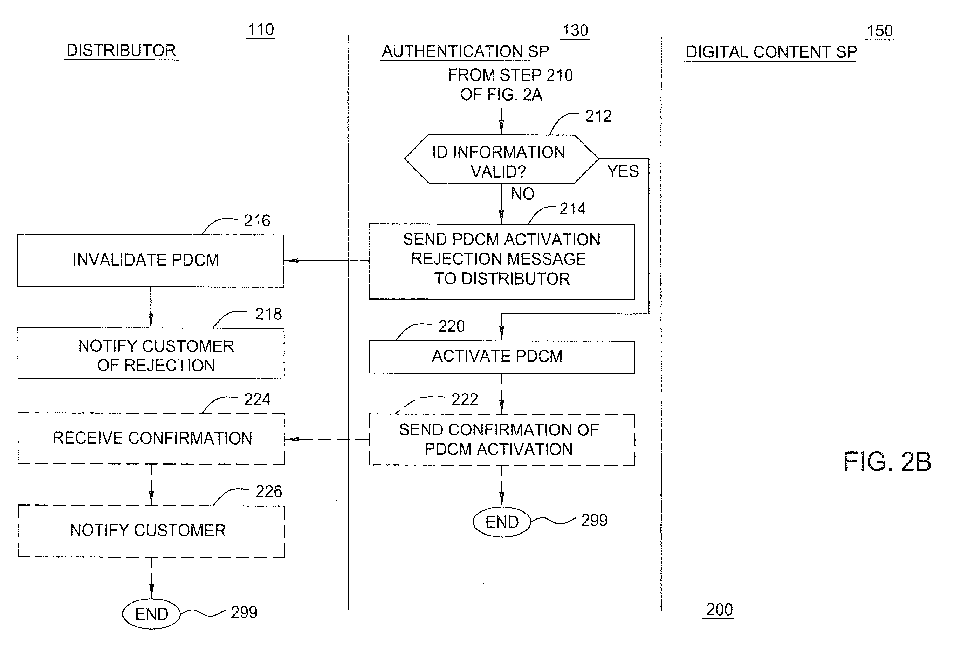

FIGS. 2A and 2B collectively depict a flow diagram of a method 200 for activating a prepaid digital content medium 104 of the present invention at an authentication service provider 130. FIGS. 2A and 2B are divided into three columns, where the first column represents actions occurring at the distributor 130, the second column represents actions occurring at the authentication service provider 130, and the third column represents actions occurring at the content provider 150. FIGS. 2A and 2B should be viewed in conjunction with FIG. 1.

Referring to FIG. 2A, the method 200 starts at step 201, where a customer 102 goes to a prepaid digital content medium distributor 110, such as a national retailer, and selects a prepaid digital content medium 104 of his/her choice. The prepaid digital content medium 104 may take any shape or form, and in one embodiment, is fabricated in a similar manner as a credit card or prepaid calling card. The prepaid digital content card 104 may be as a promotional medium by content providers and their affiliates to promote and sell digital content, such as multimedia content, and the like.

For example, in the entertainment industry, movie studios and producers may wish to promote their movies and associated soundtracks. The soundtracks may be recorded by one or more artists associated with a particular recording company. Accordingly, a multimedia content provider, such as BMG Inc. may wish to promote the latest "hot" movie for all parties involved in producing the movie/soundtrack, by offering selective portions of the soundtrack (e.g., two or three songs) to consumers to entice them to purchase other related goods and services. As such, the consumers may be able to pick and choose among various titles of movies, record labels, musical artists, and the like.

Once a customer selects at least one prepaid digital content card 104, the method 200 proceeds to step 202, where the customer 102 purchases the PCDM 104 from the distributor (retailer) 110. At step 204, the cashier at the distributor 110 then initiates authentication of the PCDM 104 by illustratively swiping the PCDM though a scanner (e.g., a card reader) 114. At step 206, the scanner 114 sends the identifying information to the authentication service provider 130, and the method 200 proceeds to step 208.

At step 208, the authentication service provider 130 receives the identifying information of a PDCM 104, as well as purchasing information from the PDCM distributor 110. At step 210, the authentication service provider 130 authenticates the received PDCM identification information. In particular, the server 132 uses the received identification information to look for a matching entry in the database 134. For example, if the PDCM identification information comprises a serial number and corresponding PIN, then the server 132 checks the serial number entries 142 and PIN entries 144 in the database 134 for a matching set.

Furthermore, the scanning device 114 at the distributor 110 also sends indicia that the PDCM 104 has been purchased. Such indicia may include flagging a bit or some other conventional technique for signifying that the PDCM has been positively purchased at a particular checkout counter 112 of a distributor 110.

At step 212, the server 132 determines if the stored identifying information and the received identifying information match. Furthermore, the server 132 checks the received information for indicia that the PDCM 104 has been purchased at the distributor 110. If the determination is negatively answered, i.e., either the identifying information does not match and/or there is no indicia of the PDCM being purchased, then the method 200 proceeds to step 214. At step 214, the server 132 rejects authentication (i.e., activation) of the PDCM 104, and in one embodiment sends a rejection message to the distributor 110. At step 216, the distributor receives the rejection message, which defines the PDCM 104 as being invalid. At step 218, the rejection message may be used by the distributor 110 to provide notice that the PDCM 104 is invalid (misidentified), the scanner 114 is not working properly, or an unauthorized attempt has been made to authenticate the PDCM 104.

If at step 212, the identifying information and indicia of a bonafide purchase is determined to be valid, then the method 200 proceeds to step 220. At step 220, the server activates the PDCM 104. In one embodiment, activation of the PDCM 104 is provided by placing an entry in the database 134 corresponding to the respective identifying information of the PDCM 104. In one embodiment, the server 132 receives the identifying information illustratively from the scanner 114 at the distributor 110. Alternatively, the distributor 110 may have the PIN of the PDCM 104 stored locally, and the PIN and serial number of the PDCM 104 are then sent together to the authentication SP 130 by the scanning device 114. One skilled in the art will recognize that any other conventional technique may be utilized to activate the PDCM 104 at the authentication SP 130. The method 200 then proceeds to optional step 222 or other wise ends at step 299.

At optional step 222, the authentication service provider 130 sends a confirmation message to the distributor 110. The confirmation message affirms that the PDCM 104 has been activated. At step 226, the cashier at the distributor may optionally notify the customer 102 that the PDCM 104 has been activated, and the method 200 proceeds to step 299, where method 200 ends.

It is noted that the method of FIGS. 2A and 2B does not show any actions occurring at the digital content provider 150 at this time (i.e., the third column of FIGS 2A and 2B are blank). In particular, the digital content provider 150 at this point in time merely serves as a warehouse for the digital content from the perspective of the customer 102, distributor 110, and authentication service provider 120. The customer 102 may not access the digital content stored at the digital content provider 150 until after the PDCM 104 has been purchased and activated.

Referring to FIG. 1, once the PDCM 104 has been purchased and activated, the customer (e.g. purchaser or a beneficiary or third party recipient) 102 may utilize the PDCM 104 to retrieve digital content from the content provider 150. The customer 102 utilizes a customer computer device 170 to communicate with the digital content provider 150. The PDCM 104 allows the customer 102 to validate the purchase (i.e., that the PDCM 104 was purchased), as well as define the type of digital content associated with the purchase of the PDCM 104, as discussed below in further detail.

The customer computer device 170 may be a cell phone, desktop computer, laptop computer, PDA or other handheld device, among any other wired or wireless computer device capable of processing and storing information. In the present invention, the customer computer device 170 must be able to communicate with the digital content provider 150, and in one embodiment, utilizes a web browser 182 to interact with a website provided by the digital content provider 150.

Specifically, the customer computer device 170 comprises a processor 172, as well as memory 174 for storing various control programs 180 to 184. The processor 172 cooperates with conventional support circuitry 178, such as power supplies, clock circuits, cache memory and the like, as well as circuits that assist in executing the software routines stored in the memory 174. As such, it is contemplated that some of the process steps discussed herein as software processes may be implemented within hardware, for example, as circuitry that cooperates with the processor 172 to perform various steps. The customer computer device 170 also comprises input/output (I/O) circuitry 176 that forms an interface between the various functional elements communicating with the customer computer device 170.

For example, in the embodiment of FIG. 1, the customer computer device 170 communicates with the content provider 150, illustratively, via a dial-up or cable modem, wireless connection, among other communication channels. It is noted that the memory 174 may comprise volatile memory (e.g., random access memory) programmable memory (e.g., EPROM), and/or non-volatile memory (e.g., disk drives). The memory 174 stores various programs associated with the computer device 170, such as an operating system (OS) 180, a web browser 182, among other programs, as well as data pertinent to the user. Once the customer 102 has purchased the PDCM 104, the customer may access the digital content provider 150 via their customer computer device 170.

The digital content provider 150 may be any digital content provider capable of presenting and/o delivering digital content, such as multimedia content, which includes video, music, ring tones, still pictures, among other multimedia, as well as data, including text and graphical data. The digital content provider 150 comprises at least one processor, such as a server (e.g., AAA server) 152, memory (e.g., storage device) 154, I/O circuitry 156, and a web server 158. The storage device 154 is used for storing a PDCM database 160 and the digital content 162.

The digital content provider 150 and the authentication service provider 130 communicate with each other via a host-to-host connection or any other direct communications channel that facilitates high speed and secure transfer of information therebetween. Furthermore, the digital content provider 150 is capable of communicating with the customer computer device over a communication link, such as the Internet, a wireless communication medium (e.g., cellular networks), or any other conventional communication link that facilitates the transfer of information therebetween.

The server 152 may be utilized as an authentication, authorization, and accounting (AAA) server. The AAA server 152 is responsible for authenticating the PDCM 104 with the authorization service provider 130, authorizing (i.e., registering) the customer 102 with the digital content provider 150, as well as maintaining accounting information, such as accounts receivable and payable with respect to the authentication service provider 130, the distributor 110, among other business operations and functions.

The web server 158 provides one or more websites and respective web pages that a customer 102 may access to select and retrieve digital content. In one embodiment, the web server 158 is an interactive information distribution server capable of streaming digital content to a requester of such content. The memory 154 may be one or more arrays of disk drives that store the AAA information, such as the PDCM database 160, as well as the digital content 162.

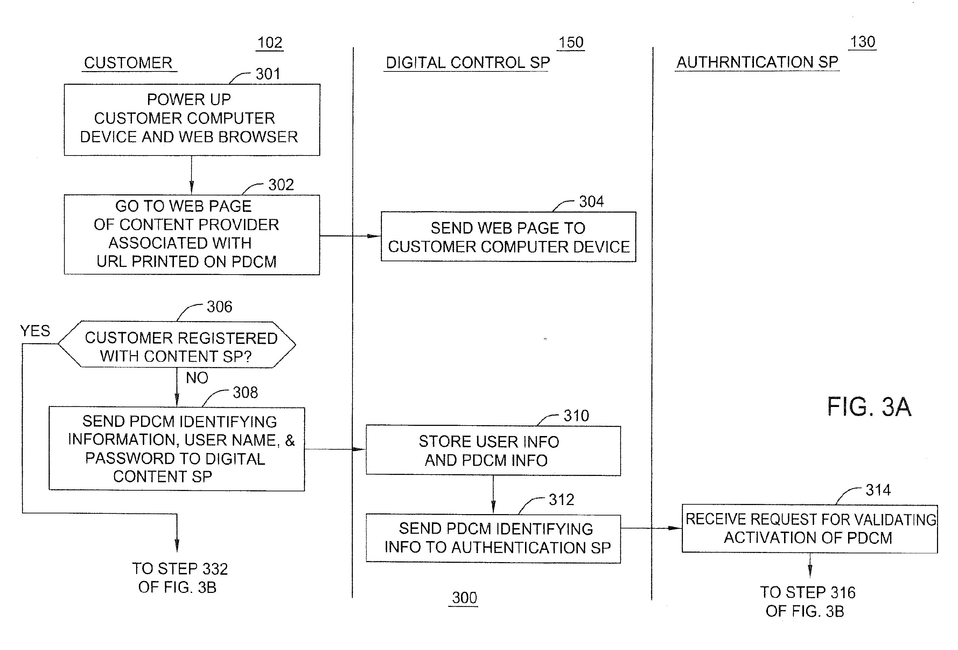

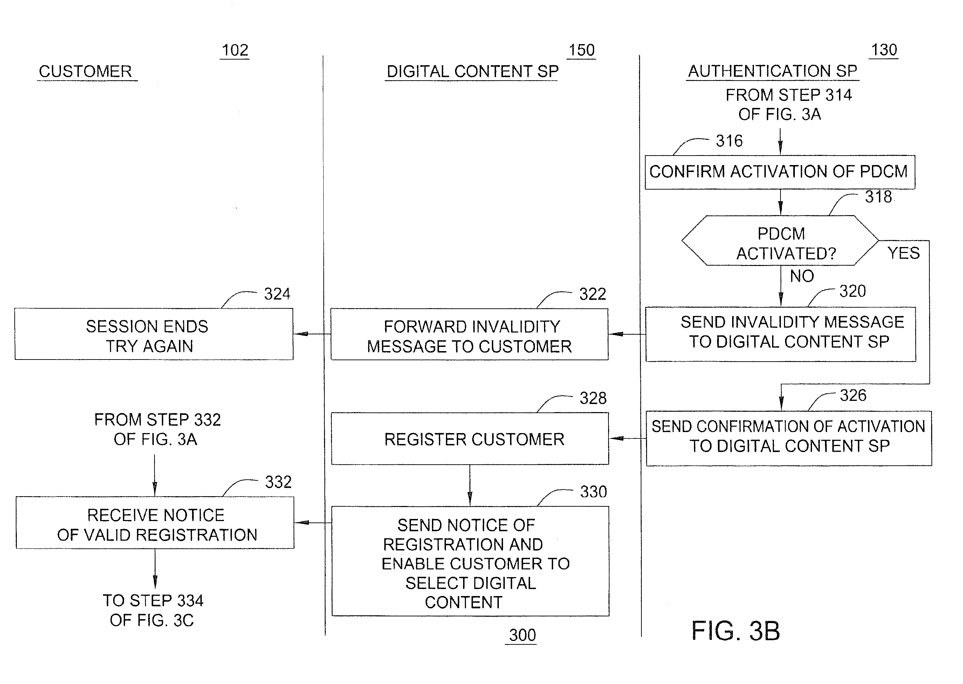

FIGS. 3A-3C collectively depict a flow diagram of a method for acquiring digital content from a digital content provider using the prepaid digital content medium of the present invention. FIGS. 3A-3C are divided into three columns, where the first column represents actions occurring by the customer 102, the second column represents actions occurring at the content provider 150, and the third column represents actions occurring at the authentication service provider 130. FIGS. 3A-3C should be viewed in conjunction with FIG. 1. It is noted that the distributor 110 only participates with respect to the method 200 of FIGS. 2A and 2B, and does not participate with respect to method 300.

Referring to FIG. 3A, the method 300 starts at step 301, where the customer 102 wishes to retrieve digital content associated with the PDCM 104 from the digital content provider 150. In particular, the customer (or any user) powers up their customer computer device 170 and opens their software capable of interfacing with the content provider 150, such as a web browser 182.

At step 302, the customer 102 illustratively goes to the website of the content provider associated with the program to retrieve the digital content. In particular, each prepaid digital content card includes a universal resource locator (URL) associated with a website of the content provider 130 that allows the customer 102 to register and retrieve the digital content. Each URL is unique to the type of digital content being offered.

For example, the content provider 130 may be offering music and videos for various artists. In one embodiment, all of the prepaid cards 104 associated with a particular content available from a particular artist will have the same URL printed on the surface of the card. At step 304, the digital content provider sends the webpage associated with the URL to the customer 102 for viewing. The method 300 then proceeds to step 306.

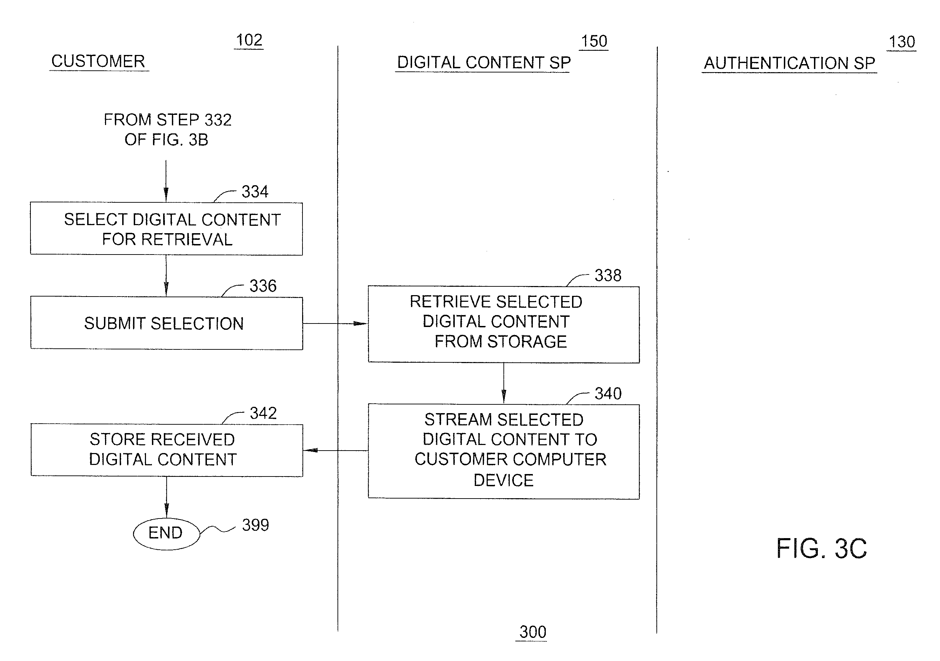

At step 306, the customer views the website and must determine if he/she is already registered with the digital content provider 150. If the customer 102 has previously registered with the content provider 150, then the method 300 proceeds to step 332 of FIG. 3B, as discussed below in further detail. If the customer 102 has not previously registered with the content provider 150, then the method 300 proceeds to step 308.

At step 308, the customer 102 registers by sending the PCDM the identifying information (e.g., serial number and PIN) written on the PCDM 104, a user name, and a password. At step 310, the digital content service provider 150 stores the user information and PCDM identifying information in the PDCM database 160. The method 300 then proceeds to step 312.

At step 312, the digital content provider 150 sends the PDCM identifying information to the authentication service provider 130 along with a request for validating activation. At step 314, the authentication service provider 130 receives the request for validating the activation of the PDCM 104, and at step 316 of FIG. 3B, the authentication service provider (SP) 130 confirms activation of the PDCM 104. In particular, the authentication SP 130 queries the database 134 at the authentication SP 130 for the matching identifying information and the indicia that the PDCM has been purchased and activated.

If at step 318, the authentication SP 130 determines that the PDCM has not been activated, then the method 300 proceeds to step 320. At step 320, the authentication SP sends an invalid PDCM message to the digital content SP 150. At step 322, in one embodiment, the digital content SP 150 forwards the invalid PDCM message to the customer 102. In an alternate embodiment, the digital content SP 150 creates a new rejection message that states the PDCM 104 has been rejected, and may include some suggestions, such as "try again," "serial number and PIN don't match" among other customer tips. In either embodiment, at step 324, the customer 102 receives a rejection message that ends the session with the content provider 150. At this point the customer 102 may enter the information again and resubmit the request, go back to the distributor 110 for a new PDCM 104 or to try to reactivate the current PDCM 104, in accordance with method 200 of FIGS. 2A and 2B. Accordingly, the method 300 provides a secure procedure to deny access from attempts to retrieve digital content using a non-activated PDCM 104.

If at step 318, the authentication SP 130 determines that the PDCM has been activated, then the method 300 proceeds to step 326. At step 326, the authentication SP sends a confirmation of PDCM activation to the digital content SP 150. At step 328, the digital content SP 150 registers the customer 102. In particular, the user name, password, and corresponding PDCM identifying information are correlated and stored. At step 330, the digital content SP 150 sends notice of valid registration and enables the customer 102 to select specific digital content associated with the purchased PDCM 104.

At step 332, the customer 102 receives the notice of registration, and the customer 102 may either continue to access the digital content SP 150 to retrieve digital content, or retrieve the content at some future time. In particular, if at step 306, the customer 102 had previously registered with the digital content SP 150, the customer may logon at a future time to select and retrieve the digital content. In either case, the method 300 proceeds to step 334 of FIG. 3C.

At step 334, the customer 102 selects the digital content he/she wishes to retrieve. The customer 102 may be offered various types of content (e.g., video, music, ring tones, MP3 music, data, and the like), as well as multiple categories and selections within each category. The customer may select as many of the offered content as he/she likes at any given time. However, in one embodiment, the customer 102 is limited to selecting and downloading the content only once. In other words, the PDCM 104 provides a one time use for the customer 102 to retrieve a particular selection of digital content. One skilled in the art will appreciate that other promotional and content distribution practices may be implemented in accordance with the teachings of the present invention.

At step 336, the customer 102 submits a request for the selected digital content, and at step 338, the digital content SP 150 retrieves the selected digital content from storage. In particular, the web server 158 retrieves the selected digital content 162 from storage 154 and streams the selected digital content to the customer computer device 170 in a transport stream, such as an MPEG transport stream, in an instance the customer device is coupled the digital content provider 150 illustratively via a wired connection, such as a T1 connection. For wireless connections, the digital content may be sent to the customer computer device 170 using PCM or other conventional wireless transport techniques. One skilled in the art will appreciate that any conventional transport technique may be used that is capable of downloading digital content to the customer computer device 170.

At step 342, the customer computer device 170 receives and stores the requested digital content. The customer 102 may then instruct the customer computer device to present the digital content, such as playing music using an MP3 player, playing a video, activating new ring tones in a cell phone, and the like. The method 300 then proceeds to step 399 where the method ends.

The present invention allows a consumer to prepay for digital content, receive an instrument associated with the type of digital content, as well as signifying payment for such digital content. The instrument has been defined herein as a prepaid digital content medium (PDCM), which in one embodiment is fabricated in the form of a prepaid card having a magnetic strip provided thereon. The PDCM may be activated at the time of purchase through a clearing house (e.g., an authentication centre) and subsequently used at a future time to retrieve the digital content from a digital content service provider. Once the possessor of the activated PDCM registers with the digital content service provider, which includes verifying activation with the clearing house, the user may retrieve selected digital content.

Accordingly, the present invention provides a customer an opportunity to receive new types of digital content and download the content directly to their user device. Further, from the perspective of the digital content distributor, the present invention provides an additional promotional vehicle for distributing and selling multimedia and data (e.g., music, video, electronic books, and the like). From the perspective of the distributor (i.e., retailer), the present invention helps to attract more customers to their stores. Further, from the perspectives of the authorization service provider, digital content provider, and distributor, they all may share in revenues driven by the consumer consumption of the present invention.

While the foregoing is directed to embodiments of the present invention, other and further embodiments of the invention may be devised without departing from the basic scope thereof, and the scope thereof is determined by the claims that follow.

## Claims

1. A method of providing digital content to consumers, comprising:
receiving unique identification information associated with a prepaid digital content medium (PDCM) from a consumer distributor of said PDCM;
activating said PDCM based upon said unique identification information; and
sending confirmation of activation of said PDCM in response to a request for confirmation from a digital content provider, said digital content provider sending said request for confirmation in response to a request for said digital content by a consumer possessing said purchased PDCM.

2. The method of claim 1 wherein said receiving step comprises:
receiving a digital signal comprising a serial number and personal identification number associated with said PDCM.

3. The method of claim 1 wherein said activating step comprises:
comparing said received identification information to identification information stored in a database; and
in response to said received and stored identification information matching, providing an indicia of activation for said PDCM.

4. The method of claim 3 wherein said activating step further comprises:
determining whether said PDCM has been purchased by a consumer; and
providing indicia of purchase associated with said PDCM.

5. The method of claim 4 further comprising rejecting activation from said consumer distributor in an instance where said received and stored identification information fails to match.

6. The method of claim 4 further comprising rejecting activation from said consumer distributor in an instance where said PDCM has not been purchased by a consumer.

7. The method of claim 1, wherein said sending confirmation of activation of said PDCM comprises:
receiving an activation request from said digital content provider:
querying a database for an indicia of activation associated with said PDCM; and
sending said confirmation of activation to said digital content provider in an instance said PDCM is activated.

8. The method of claim 1 further comprising:
sending notice of non-activation of said PDCM to said digital content provider in response to said request for confirmation from said digital content provider, in an instance where said PDCM is not activated.

9. The method of claim 8, wherein said sending notice of non-activation of said PDCM comprises:
receiving an activation request from said digital content provider:
querying a database for an indicia of activation associated with said PDCM; and
sending said notice of non-activation to said digital content provider in an instance said PDCM is not activated.

10. The method of claim 1 wherein said digital content provider sending said request for confirmation in response to a request for said digital content by a consumer possessing said purchased PDCM comprises:
receiving, at said digital content provider, said request for digital content from a consumer computer device associated with said consumer; and
downloading said digital content from said content provider to said consumer computer device in an instance where said PDCM is confirmed as being activated and said consumer is registered with said content provider.

11. A system for providing digital content, comprising:
a prepaid digital content medium (PDCM) comprising unique identification information thereon;
a PDCM consumer distributor for selling said PDCM;
a digital content provider for storing said digital content associated with said PDCM, said digital content provider adapted for communication with a consumer computer device to request and receive said digital content; and
an authentication service provider for maintaining corresponding identification information associated with said PDCM, said authentication service provider adapted to activate said PDCM upon receiving notice of purchase of said PDCM, said authentication service provider sending confirmation of activation of said PDCM in response to a request for confirmation from said digital content provider, wherein said digital content provider sends said request for confirmation in response to said consumer computer device requesting to receive said digital content from said service provider.

12. The system of claim 11, wherein said PDCM comprises a card having a magnetic strip.

13. The system of claim 12, wherein said PDCM consumer distributor further comprises a PDCM scanning device, said PDCM scanning device being capable of sending said unique identification information of said PDCM to said authentication service provider.

14. The system of claim 11, wherein said identification information of said PDCM comprises a serial number and a personal identification number.

15. The system of claim 11, wherein said digital content provider comprises:
a web server;
a storage device coupled to said web server, said storage device comprising digital content associated with said PDCM.

16. The system of claim 15, wherein said digital content provider further comprises:
an authentication, authorization, and accounting (AAA) server coupled to said storage device; and
a PDCM database stored in said storage device.

17. The system of claim 11, wherein said customer computer device comprises at least one of a desktop computer, a laptop, a PDA, and a cellular phone.

18. The system of claim 11, wherein said digital content comprises at least one of video, music, multi-media content, electronic books, and electronic data.

19. A method for providing digital content using a prepaid digital content medium (PDCM), comprising:
activating said PDCM at an authentication service provider in response to receiving identifying and purchase information associated with said PDCM from a distributor of said PDCM; and
providing said digital content to a computer device of a user from a digital content provider, in an instance where said user is registered with said digital content provider, and said identifying and purchasing information associated with said PDCM is reconfirmed as being activated by said authentication service provider.

20. The method of claim 19, wherein said digital content comprises at least one of video, music, multi-media content, electronic books, and electronic data.
